# EUROPÄISCHE PATENTSCHRIFT

(11) **EP 0 403 576 B1**
(45) Veröffentlichungstag und Bekanntmachung des Hinweises auf die Patenterteilung: **25.01.1995**
(21) Anmeldenummer: 89905629.5
(22) Anmeldetag: 23.05.1989
(51) Int. Cl.: F16G 13/20

(54) **SCHUBKETTE MIT ZUGEHÖRIGEM ANTRIEB**
THRUST CHAIN AND ITS DRIVE
CHAINE DE POUSSEE ET SON ENTRAINEMENT

(30) Priorität: 26.05.1988 DE 8806871 U
(43) Veröffentlichungstag der Anmeldung: 27.12.1990
(73) Patentinhaber: Wilcke, Hans, D-53498 Bad Breisig (DE)
(72) Erfinder: Wilcke, Hans, D-53498 Bad Breisig (DE)
(86) Internationale Anmeldenummer: DE8900322
(87) Internationale Veröffentlichungsnummer: WO8911602

(56) Entgegenhaltungen:
- DE-A- 2 251 307
- DE-B- 1 046 422
- DE-C- 131 165
- DE-C- 642 402
- FR-A- 394 214
- FR-A- 2 345 626
- GB-A- 495 894
- US-A- 2 741 133
- US-A- 3 672 237
- US-A- 3 742 775
- Soviet Inventions Illustrated, Derwent Publications Ltd, London (GB), week C17, Q64, No. D 8200C /17 4 June 1980 & SU, A, 681272 (DZYUBINSKII) 25 August 1979

## Beschreibung

Die Erfindung betrifft eine Schubkette mit zugehörigem Antrieb zur Übertragung von Schub- und Zugkräften, dadurch gekennzeichnet, daß die Schubkette einseitig steif (rückensteif) und außerhalb von Antriebs(2) und Umlenk(3)-Gehäusen allseitig steif ausgebildet ist und die Antriebs- und Umlenkgehäuse einen während des Betriebes variablen Ein-/Austrittswinkel der Kette ( 20) zulassen.

Es sind Schubketten bekannt, die sowohl Zug- wie auch Schubkräfte übertragen können.

Dokument US A 3 672 237 zeigt eine solche Kette gemäß Oberbegriff der Ansprüche 1 und 2. Sie erfordert aber außerhalb ihres Umlenkgehäuses die Führung in einer Führungsschiene (17), weil eine Knicksicherung fehlt. Zwar wird diese Kette im Umlenkbereich auf Rollen abgestützt, aber es sind keine Vorkehrungen getroffen, um mit im Betrieb variablem Eintritts-/Austrittswinkel arbeiten zu können.

Dokument GB A 495 894 beschreibt ebenfalls eine Kette zum Übertragen von Schub- und Zugkräften gemäß Oberbegriff des Anspruchs 3, bei der die einzelnen Kettenglieder an ihren äußeren Flanken mit Rollen zur Übertragung der Schubkräfte ausgestattet sind. Auch diese besitzt keine Knicksicherung und sieht variable Eintritts-/Austrittswinkel nicht vor.

Aufgabe dieser Erfindung ist es, eine Schubkette mit zugehörigem Antrieb vorzustellen, die außerhalb der Antriebs- und Umlenkgehäuse selbstsichernd allseitig steif ist, aus möglichst wenigen Einzelteilen besteht, sich durch minimalen Verschleiß auszeichnet, durch Herabsetzung metallischer Berührungsstellen geräuscharm arbeitet und einen Betrieb mit sich während der Nutzung verändernden Ein- bezw. Austrittswinkeln an den Gehäusen zuläßt.

Schubketten gemäß dieser Erfindung bieten die Möglichkeit, Sckwenkarme von Kränen, die mit üblicher Seilaufhängung vertikal nur um weniger als 90° schwenkbar waren, nun mit einem Schwenkbereich von nahe 180° auszustatten.

Schwere Lasten können, z.B. zum Be- und Entladen, geschoben, gezogen und gekippt werden.

Die geringen äußeren Abmessungen des Antriebes lassen deutliche Vorteile dort erkennen, wo hohe Druck- und Zugkräfte gefordert sind, der verfügbare Raum aber hydrauliche Kolben oder Kurbeltriebe nicht zuläßt.

Herkömmliche rückensteife Ketten erfordern je Teilungsabstand der Kette eine Berührungsfläche zur Schubübertragung.

Die Schubkette gemäß dieser Erfindung ermöglicht im Bedarfsfalle eine Berührungsfläche je doppeltem Teilungsabstand und erlaubt damit größere Präzision.

Im folgenden wird die Erfindung anhand von Zeichnungen näher erläutert. Dabei zeigen diese Zeichnungen lediglich Ausführungsbeispiele und schließen andere denkbare erfindungsgemäße Gestaltungsformen nicht aus.
Fig. 1 zeigt im Schnitt ein Antriebsgehäuse (2) mit Schubkette (20) gemäß dieser Erfindung,
Fig. 2 zeigt die Schubkette (20) in Seitenansicht und im Schnitt,
Fig. 3 die Schubkette (20) im Schnitt mit gelöster Verriegelung,
Fig. 4 ein Endglied (38) der Schubkette (20),
Fig. 5 eine drehbare Rollenplatte (5) mit die Schubkette (20) direkt stützenden Rollen (13),
Fig. 6 ein Kettenmagazin und
Fig. 7 eine alternative Form von Kette (20) und Gehäuse (2,3).

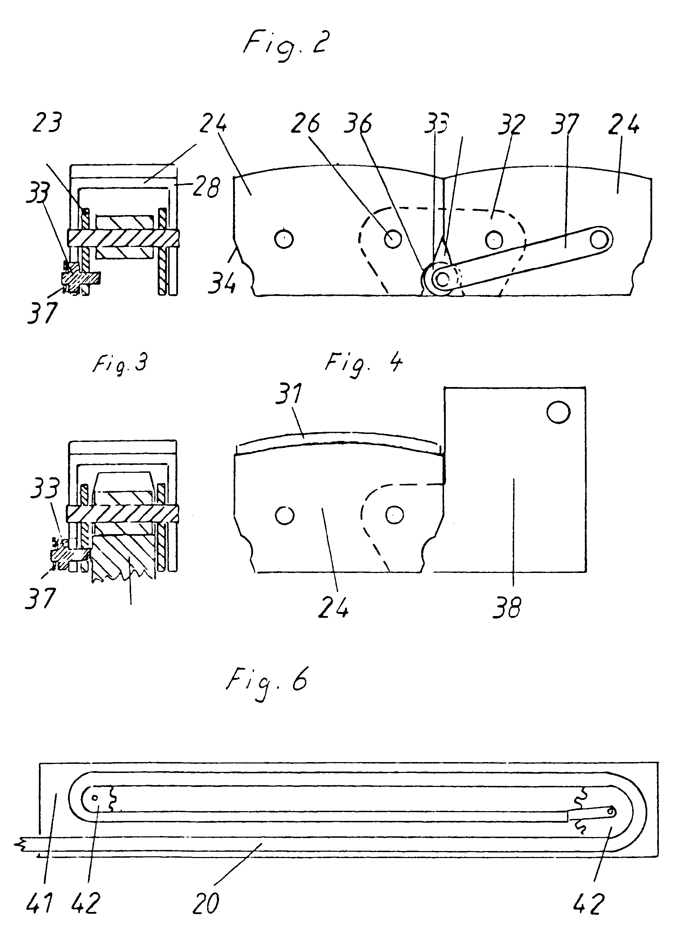

Fig. 2 zeigt eine erfindungsgemäße Ausführungsform der Schubkette (20). Die beiden äußeren Kettenlaschen (24) sind durch die Fläche (29) miteinander verbunden. Diese dient der Übertragung der Schubkräfte in das Gehäuse (2,3). Die Fläche ist in der Regel kreisbogenförmig, bezogen auf den Durchmesser des Antriebs-Kettenrades (6), ausgebildet. Alternativ kann die Fläche auch, insbesondere wenn die Kette mit Kettenrädern unterschiedlichen Durchmessers betrieben werden soll, andersartig gewölbt oder nur an den Kanten abgeschrägt sein, um einem Verschleiß des lasttragenden Bandes (9) vorzubeugen.

In einer weiteren Alternative kann auch, insbesondere bei nur geringen zu übertragenden Schubkräften auf die Fläche (29) verzichtet werden. In diesem Falle sollten die äußeren Flanken der Laschen (23,24) wie beschrieben etwa kreisbogenförmig gestaltet sein.

Erfindungsgemäß erfolgt die Sicherung der Kette(20) gegen Einknicken außerhalb der Antriebs- und Umlenkgehäuse (2,3) dadurch, daß die bei Streckung der Kette(20) zwischen den Außenlaschen (24) bezw. Innenlaschen (23) sich bildenden Freiräume (32) durch einen Füllkörper (33) geschlossen werden und daß dieser Füllkörper (33) durch Führung im Gehäuse oder durch das eingreifende Zahnrad oder eine Federkraft einen Bewegungsimpuls erfährt. Eine Lösungsmöglichkeit wird nachfolgend beschrieben und in Fig. 2 in verriegeltem und in Fig. 3 in entriegeltem Zustand dargestellt. Die äußeren Laschen (24) sind etwa in der Höhe der Bolzenachsen (27) nach innen so weit abgeschrägt, daß die Außenlaschen (24) sich erst bei der größten vorgesehenen Krümmung der Kette berühren. (Dadurch wird bei einem Versagen der Knicksicherung ein plötzliches, vollständiges Einknicken der Kette unter Schublast verhindert). Die Schrägungen sind weiter mit Ausrundungen (36) versehen. In den Innenlaschen (23) befinden sich korrespondierend zu den Ausrundungen (36) der Außenlaschen (24) Bohrungen (35). In diese Bohrung (35) ist ein Füllkörper (33) mit seinem dünneren Teil beweglich eingesetzt. Er ragt über die Innenlasche (23) nach innen. Der dickere Teil des Füllkörpers (33) entspricht in seinem Durchmesser der Öffnungsweite der beiden Ausrundungen (36) bei gestreckter Kette. Der Füllkörper (33) ist an einer Blattfeder (37) befestigt, die wiederum z.B. an einem Kettenbolzen (26) befestigt ist. Die Blattfeder drückt den dickeren Teil des Füllkörpers (33) bei gestreckter Kette zwischen die äußeren Laschen (24) und hält ihn in dieser Position. Dabei ragt der dünnere Teil des Füllkörpers (33) in den Raum zwischen die Innenlaschen (23). Im Bereich eines Antriebs- oder Umkehr-Gehäuses (2,3) drückt jeweils ein Zahn des Zahnrades (6,7) gegen den dünneren Teil des Füllkörpers (33) und drückt ihn gegen die Federkraft von (37) so weit nach außen, daß sich der dickere Teil des Füllkörpers (33) außerhalb der Außenlaschen (24) befindet und den Außenlaschen Freiraum für ihre Knickbewegung läßt. Die Ausrundungen (36) entsprechen in gestrecktem Kettenzustand der Form des dickeren Teils des Füllkörpers (33), im Zustand größtmöglicher Knickung entspricht die Restöffnung der Dicke des dünneren Teils des Füllkörpers (33).

Die beschriebene Knicksicherung kann erfindungsgemäß beidseitig oder einseitig angebracht sein. Sie kann weiter die Spreizung der Außenlaschen (24) oder der Innenlaschen (23) bewirken.

Andere Bewegungsformen und Bewegungsrichtungen für den Füllkörper(33) und andere Gestaltungsformen des Füllkörpers in Einklang mit den Grundgedanken dieser Erfindung sind denkbar und von dieser Erfindung mit erfaßt.

Das Endglied (38) der Schubkette (20) ist so gestaltet, daß die kraftübertragende Verbindung in der Höhe der rückensteifenden Flächen (29) oder außerhalb von diesen erfolgt und so die Steifigkeit der Kette durch Kraftangriff außerhalb der Bolzenachsen (27) bewirkt wird.

Das Antriebsgehäuse (2) besteht aus zwei Gehäuseplatten (4), zwischen denen und in denen das Antriebskettenrad (6) mit der durchgehenden Welle (8) gelagert ist. Ferner sind im Gehäuse (2) die Rollen (10,11 und 14) angebracht. Über diese Rollen und die um das Kettenrad (6) gelegte Kette (20) umfassend ist ein lasttragendes Band (9), z.B. ähnlich einem flach gestalteten Keilriemen vorgesehen. Das Band läuft mit der gleichen Geschwindigkeit um wie die Kette, sodaß eine verschleißende Reibung vermieden wird. Das elastische Band (9) bewirkt eine gleichmäßige Schubkraft-Übertragung zwischen Gehäuse (2) und Kette (20) auch bei nicht kreisbogenförmig ausgebildeten Flächen (29) der Kette (20). Die Rolle(10) ist in der Regel so angebracht, daß das lasttragende Band (9) die Außenfläche (29) der Kette (20) erst berührt, wenn der Abknickvorgang der Kette beendet ist, um so verschleißende Relativbewegungen zu vermeiden. Die Umlenkrolle (14) ist drehbar auf dem Rollenträger (15) gelagert, der um den Schwenkpunkt (17) schwenkbar ist. Das äußere Ende des Rollenträgers (15) ist abgewinkelt und trägt drehbar die Führungsrolle (16), die sich an der Innenseite der Kette (20) abrollt. Eine Anderung des Eintritts-/Austrittswinkels der Kette (20) bewirkt so eine zugehörige Lageveränderung der Umlenkrolle (14) und damit eine kraftschlüssige Umfassung der Kette (20) durch das lasttragende Band (9).

Alternativ kann bei nur geringen Austrittswinkel-Veränderungen die Umlenkrolle (14) unter Verzicht auf Rollenträger (15) und Führungsrolle (16) stationär im Gehäuse angebracht sein.

Bei Auftreten hoher Schubkräfte können zur Entlastung des Bandes (9) weitere Stützrollen kreisbogenförmig im die Kette (20) umfassenden Bereich angeordnet werden. Dabei bleiben die Vorteile des elastischen Bandes (9): Geräuschminderung, gleichmäßige Lastverteilung, erhalten.

Alternativ können unter Wegfall des lasttragenden Bandes (9), die Kette (20) umfassend, auch direkt die Kette (20) tragende Rollen (13) im Gehäuse (2) kreisbogenförmig angeordnet sein. Um einen stoßfreien Lauf sicherzustellen, sollte dann der Abstand zwischen den Rollenachsen kleiner sein als die Länge der Außenflächen (29). Darüber hinaus können die Spalte zwischen den Außenflächen (29) schräg zu den Bolzenachsen (27) oder pfeilförmig ineinandergreifend ausgebildet sein.

In einer weiteren alternativen Ausführungsform können die Rollen (10,11,14) oder die direkt tragenden Rollen (13) zwischen zwei Rollenplatten (5) angeordnet sein. Diese Rollenplatten (5) wiederum sind drehbar um Welle (8) gelagert und können von der Führungsrolle (16) geführt werden. Eine der Rollen (10,11,14) oder der Rollenträger (15) könen in üblicher Weise mit einer Spannvorrichtung ausgestattet sein.

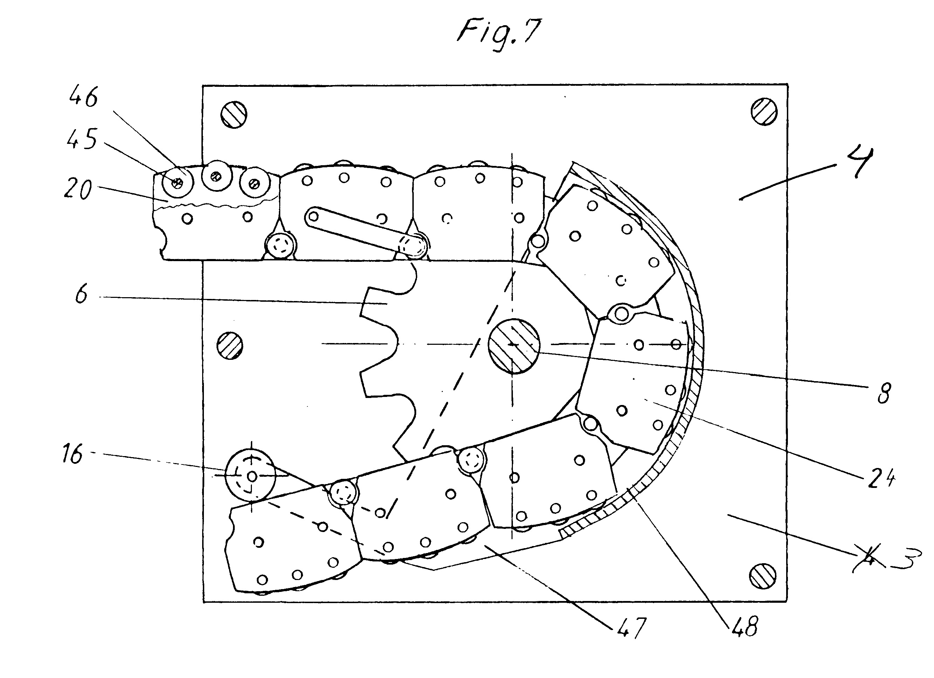

In einer weiterer alternativen Ausführungsform (vergl. Fig. 7) sind die Außenlaschen (24) in der Nähe ihrer äußeren Flanken (28) mit Rollenbolzen (45) verbunden, die kreisbogenförmig bezogen auf den Drehpunkt des Antriebs-/ Umlenk-Kettenrades (6,7) angeordnet sind und auf denen sich drehbar Stützrollen befinden.

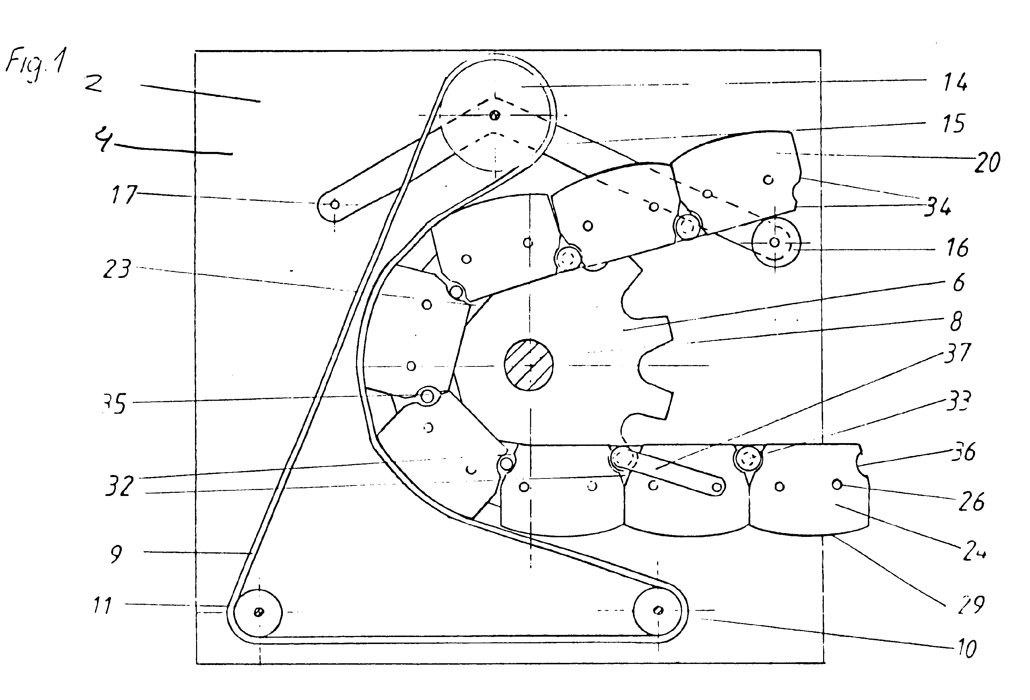

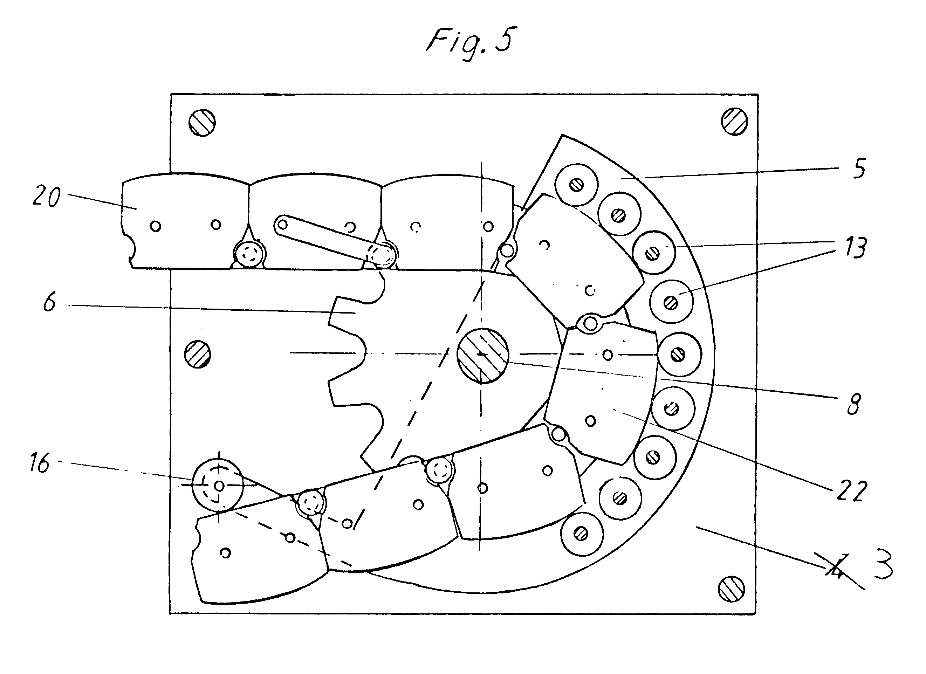

In dem Antriebs-/Umlenkgehäuse (2,3) sind, um die Welle (8) drehbar, Platten (47) angebracht, die mit einer kreisbogenförmiger Rollfläche (48) verbunden sind. Auf dieser Rollfläche (48) rollen die Stützrollen (4() sich beim Durchlaufen des Gehäuses (2,3) ab, auftretende Schubkräfte der Schubkette (20) auf die Gehäuse (2,3) übertragend. Diese Alternative erlaubt eine Kostengünstige Herstellung der Außenlaschen schwerer Schubketten im Stanzverfahren. Wie auch in Fig. 1 und 5 dargestellt, wird über die an den Platten (4 ) angebrachte Führungsrolle (16) bewirkt, daß die Rollfläche (48) sich dem Einfallswinkel der Kette (20) anpasst.

Insbesondere für Schubketten mit geringen Lasten bietet sich an, die Vorteile von Kunststoffen, z.B. leichte Verformbarkeit und Korrosionsbeständigkeit zu nutzen und einzelne Teile von Kette und Antrieb, insbesondere die Außenlaschen (24 und Innenlaschen (23) aus geeigneten Kunststoffen herzustellen.

Die Welle (8) wird in der Regel über ein handelsübliches, selbstsperrendes Schneckengetriebe mit angebautem Antriebsmotor bewegt. Falls mehrere Schubketten parallel betrieben werden sollen, bietet sich an, alle Antriebs-Zahnräder auf einer gemeinsamen Welle anzuordnen.

Umlenkgehäuse (3) sind im Prinzip gleichartig gestaltet wie Antriebsgehäuse (2), jedoch wird das Umlenk-Kettenrad (7) nicht angetrieben. Bei geringen Umlenkwinkeln kann die Anordnung von 1 oder 2 Rollen (13) im Gehäuse ausreichend sein.

Lastfreie Teile der Kette (20) werden zweckmäßigerweise in einem Kettenmagazin (41) verwahrt. Zur Verringerung der Baulänge ist eine Speicherung in zwei oder mehr Lagen wünschenswert. Erfindungsgemäß werden, der Anzahl der Lagen entsprechend in Kettenrichtung frei bewegliche Kettenräder (42) mit zweckentsprechendem Durchmesser angebracht. Sie werden im Magazin (41) gegen Verkanten sicher geführt und rollen mit der Verlängerung/Verkürzung der Kettenlänge, die Knicksperre betätigend, mit. Das Ende der Kette ist bei zwei Lagen am Magazin, bei mehr Lagen an einem relevanten Kettenrad befestigt.

## Patentansprüche

1. Schubkette mit zugehörigem Antrieb zur Übertragung von Schub- und Zugkräften, wobei die Schubkette (20) mit Innenlaschen (23) und Außenlaschen (24) einseitig steif (rückensteif) ausgebildet
und in einem Antriebs- und Umlenkgehäuse (2,3) über ein für Schub und Zug treibendes Kettenrad (6) geführt ist,
wobei die äußeren Flanken (28) auf der rückensteifen Seite der Kette (20) zur Übertragung der Schubkräfte auf die Gehäuse (2,3) ausgebildet sind, dadurch, daß die Flanken (28) kreisbogenformig bezogen auf den Drehpunkt des Kettenrad (6,7) ausgebildet sind,
dadurch gekennzeichnet, daß die Flanken (28) zu einer einzigen tragenden Fläche (29) verbunden sind,
wobei die Außenlaschen (24), und/oder die Innenlaschen (23) von ihrer Bolzenachse (27) einwärts etwa entsprechend der Hälfte des vorgesehenen Knickwinkels angeschrägt sind,
und der in gestrecktem Zustand sich bildende Freiraum (32) durch einen beweglichen, ggflls. federbelasteten Füllkörper (33) zumindest teilweise ausgefüllt wird, die Kette (20) außerhalb der Gehäuse (2,3) gegen Einknicken sichernd, und die Füllkörper (33) durch Berührung, Führung und Federkraft durch Gehäuse (2,3), Antriebs- oder Umlenkkettenrad (6,7,42) zwischen Sperrstellung und Entsperrstellung bewegt,
wobei die Antriebs- und Umlenkgehäuse (2,3) einen während des Betriebes variablen Ein-/Austrittswinkel der Kette (20) zulassen,
wobei die Kette (20) an ihrem durch Durchmesser und Ausbildung des Kettenrades (6) vorgegebenen äußeren Umfang von einem lasttragenden Band (9) umfaßt wird, das über Rollen (10,11,14) innerhalb des Antriebsgehäuses (2) umlaufend angebracht ist, wobei die Rollen (14) auf einem Rollenträger (15) drehbar angebracht sind, der wiederum schwenkbar im Antriebsgehäuse (2) befestigt ist und an seinem winkelig über die Umlenkrolle (14) hinausragenden Ende ein die Innenseite der Kette (20) berührende Führungsrolle (16) trägt.

2. Schubkette mit zugehörigem Antrieb zur Übertragung von Schub- und Zugkräften, wobei die Schubkette (20) mit Innenlaschen (23) und Außenlaschen (24) einseitig steif (rückensteif) ausgebildet
und in einem Antriebs- und Umlenkgehäuse (2,3) über ein für Schub und Zug treibendes Kettenrad (6) geführt ist,
wobei die äußeren Flanken (28) auf der rückensteifen Seite der Kette (20) zur Übertragung der Schubkräfte auf die Gehäuse (2,3) ausgebildet sind,
wobei die Kette (20) in den Antriebs- und Umlenkgehäusen (2,3) von mehreren vornehmlich kreisbogenförmig angeordneten Rollen (13) umfaßt wird,
dadurch gekennzeichnet, daß diese Rollen (13) zwischen zwei Rollenplatten (5) befestigt sind, die um die Welle (8) der Antriebs- oder Umlenkgehäuse (2,3) drehbar gelagert sind,
wobei die Außenlaschen (24) und/oder die Innenlaschen (23) von ihrer Bolzenachse (27) einwärts etwa entsprechend der Hälfte des vorgesehenen Knickwinkels angeschrägt sind,
und der in gestrecktem Zustand sich bildende Freiraum (32) durch einen beweglichen, ggflls. federbelasteten Füllkörper (33) zumindest teilweise ausgefüllt wird, die Kette (20) außerhalb der Gehäuse (2,3) gegen Einknicken sichernd, und die Füllkörper (33) durch Berührung, Führung und Federkraft durch Gehäuse (2,3), Antriebs- oder Umlenkkettenrad (6,7,42) zwischen Sperrstellung und Entsperrstellung bewegt,
wobei die Antriebs- und Umlenkgehäuse (2,3) einen während des Betriebes variablen Ein-/Austrittswinkel der Kette (20) zulassen.

3. Schubkette mit zugehörigem Antrieb zur Übertragung von Schub- und Zugkräften, wobei die Schubkette (20) mit Innenlaschen (23) und Außenlaschen (24) einseitig steif (rückensteif) ausgebildet
und in einem Antriebs- und Umlenkgehäuse (2,3) über ein für Schub und Zug treibendes Kettenrad (6) geführt ist,
wobei die äußeren Flanken (28) auf der rückensteifen Seite der Kette (20) zur Übertragung der Schubkräfte auf die Gehäuse (2,3) ausgebildet sind,
wobei nahe der äußeren Flanken (28) Rollenbolzen (45) angeordnet sind, auf denen sich drehbare Stützrollen (46) befinden,
wobei die Kette (20) in den Antriebs- und Umlenkgehäusen (2,3) von einer vornehmlich kreisbogenförmig angeordneten Rollfläche (48) umfaßt wird,
dadurch gekennzeichnet, daß diese Rollfläche (48) mit drehbaren Platten (47) verbunden ist, die um die Welle (8) des Antriebs- oder Umlenkgehäuses (2,3) drehbar gelagert sind,
wobei die Außenlaschen (24) und/oder die Innenlaschen (23) von ihrer Bolzenachse (27) einwärts etwa entsprechend der Hälfte des vorgesehenen Knickwinkels angeschrägt sind,
und der in gestrecktem Zustand sich bildende Freiraum (32) durch einen beweglichen, ggflls. federbelasteten Füllkörper (33) zumindest teilweise ausgefüllt wird, die Kette (20) außerhalb der Gehäuse (2,3) gegen Einknicken sichernd, und die Füllkörper (33) durch Berührung, Führung und Federkraft durch Gehäuse (2,3), Antriebs- oder Umlenkkettenrad (6,7,42) zwischen Sperrstellung und Entsperrstellung bewegt,
wobei die Antriebs- und Umlenkgehäuse (2,3) einen während des Betriebes variablen Ein-/Austrittswinkel der Kette (20) zulassen.

4. Schubkette mit Antrieb nach Anspruch 3, dadurch gekennzeichnet, daß die Außenflanken (28) der Laschen (23,24) bzw. die Außenflächen (29) eben oder in Kurvenform gestaltet sind.

5. Schubkette mit Antrieb nach Anspruch 1,3 und 4, dadurch gekennzeichnet, daß die Flanken (28) bzw. die Außenflächen (29) etwa eine Kettenteilung lang sind.

6. Schubkette mit Antrieb nach Anspruch 1, dadurch gekennzeichnet, daß mehr als 3 Rollen (10,11,14) das lasttragende Band (9) führen.

7. Schubkette mit Antrieb nach Anspruch 1,5 und 6, dadurch gekennzeichnet, daß das lasttragende Band (9) aus metallenen Kettengliedern zusamengesetzt ist.

8. Schubkette mit Antrieb nach Anspruch 1,2,3,4,5,6,7 und 8, dadurch gekennzeichnet, daß die Außenflächen (29) bzw. die äußeren Flanken (28) und oder das lasttragende Band (9) nach Anspruch 7 mit einem elastischen, geräuschmindernden, korrosionsschützenden, verschleißmindernden den Belag (31) versehen sind.

9. Schubkette nach Anspruch 1,2,3,4,5,6,7,8 und 9, dadurch gekennzeichnet, daß einzelne Teile aus Kunststoffen gefertigt werden.

10. Schubkette nach Anspruch 1,2,3,4,5,6,7,8, und 9, dadurch gekennzeichnet, daß zur Verwahrung ungenutzer Kettenteile in mehreren Lagen diese in einem Magazin (43) über Selbsttätig abrollende Kettenräder (42) geführt sind.

## Claims

1. Traction chain with the appropriate drive for the transmission of traction and tension forces, with the traction chain (20) having inner brackets (23) and outer brackets (24) being rigid on one side (rigid backside)
and is guided in a drive housing (2) through a traction and tension carrying chain wheel (6),
with the outer flanks (28) of the rigid backside of the chain (20) being provided for the transmission of the traction force to the housing (2, 3) because of the fact that these flanks (28) are circular in relation to the pivot of the drive/chain guide housing (6, 7),
characterised by the fact that these flanks (28) are connected to a single bearing surface (29) with the outer brackets (24) and/or the inner brackets (23) being inclined from their bolt axis (27) inwards corresponding approximately to one half of the intended bend angle,
and the space (32) which is formed in the extended position is filled out at least partially by a moveable, where required spring-loaded filling element (33), the chain (20) outside the housing (2, 3) secures against collapsing and these filling elements (33) are moved between locking position and unlocking position by contacting, guidance and spring force through housing (2,3), drive or guide chain wheel (6, 7, 42), with the drive and guide housing (2, 3) allowing a variable entrance/emersion angle of the chain (20).
with the chain (20) being spanned at its diameter and outer circumference determined by the formation of the chain wheel (6) by a load-bearing belt (9) which is mounted inside the housing (2), revolving around pulleys (10, 11, 14) with the guide pulley (14) pivoting on pulley carrier (15) which in turn is mounted for tiltable movement in the drive housing (2) and at its end which projects angularly over the guide pulley (14) carries guide pulley (12) which makes contact with the inside of the chain (20),
which is guided into a magazine (43) through automatically winding chain wheels (42) in several layers for the storage of unused chain elements.

2. Traction chain with the appropriate drive for the transmission of traction and tension forces, with the traction chain (20) having inner brackets (23) and outer brackets (24) being rigid on one side (rigid backside)
and is guided in a drive housing (2) through a traction and tension carrying chain wheel (6),
with the outer flanks (28) of the rigid backside of the chain (20) being provided for the transmission of the traction force onto the housing (2,3)
with the chain (20) in the chain drive and chain guide housings (2,3) being spanned by several pulleys (13) primarily in circular arrangement,
characterised by the fact that these pulleys (13) are mounted between two pulley plates (5) which are pivoted on the shaft (8) of the drive and guide housing (2,3),
with the outer brackets (24) and/or the inner brackets (23) being inclined from their bolt axis (27) inwards corresponding approximately to one half of the intended bend angle.
and the space (32) which is formed in the extended position is filled out at least partially by a moveable, where required spring-loaded filling element (33), the chain (20) outside the housing (2,3) secures against collapsing and these filling elements (33) are moved between locking position and unlocking position by contacting, guidance and spring force through housing (2,3), drive or guide chain wheel (6, 7, 42),
with the drive and guide housing (2, 3) allowing a variable entrance/emersion angle of the chain (20)
which is guided into a magazine (43) through automatically winding chain wheels (42) in several layers for the storage of unused chain elements.

3. Traction chain with the appropriate drive for the transmission of traction and tension forces, with the traction chain (20) having inner brackets (23) and outer brackets (24) being rigid on one side (rigid backside),
and which is guided in a drive housing (2) through a traction and tension carrying chain wheel (6),
with the outer flanks (28) of the rigid backside of the chain (20) being provided for the transmission of the traction force onto the housing (2,3)
with pulley bolts (45) being arranged closely to the outer flanks (28) on which pivotable support pulleys (46) are located
with the chain (20) in the drive and chain guide housings (2,3) being spanned by a pulley surface (13) primarily in circular arrangement,
characterised by the fact that this pulley surface (48) is connected with pivotable plates (47) which are mounted for pivoting movement around the shaft (8) of the drive or guide housings (2,3)
with the outer brackets (24) and/or the inner brackets (23) being inclined from their bolt axis (27) inwards corresponding approximately to one half of the intended bend angle,
and the space (32) which is formed in the extended position is filled out at least partially by a moveable, where required spring-loaded filling element (33), the chain (20) outside the housings (2,3) secures against collapsing and these filling elements (33) are moved between locking position and unlocking position by contacting, guidance and spring force through housings (2, 3), drive or guide chain wheel (6,7, 42),
with the drive and guide housings(2, 3) allowing a variable entrance/emersion angle of the chain (20)
which is guided into a magazine (43) through automatically winding chain wheels (42) in several layers for the storage of unused chain elements.

4. Traction chain with drive according to Claim 3, characterised by the fact that the outer flanks (28) of the brackets (23, 24) and/our outer surfaces (29) are flat or circular.

5. Traction chain with drive according to Claims 1, 3 or 4 characterised by the fact that the outer flanks (28) and/or the outer surfaces (29) have a length of approximately one chain division.

6. Traction chain with drive according to Claim 1, characterised by the fact the chain (20) does not have a security against bending (33, 35, 37).

7. Traction chain with drive according to Claims 2, 3 and 4 characterised by the fact that more than 3 pulleys (10, 11, 14) carry the load-bearing belt (9).

8. Traction chain with drive according to Claims 1, 5 and 6, characterised by the fact that the load-bearing belt (9) consists of metal chain elements.

9. Traction chain with drive according to Claims 1,2,3,4,5,6,7 and 8, characterised by the fact that the outer surfaces (29) and/or the outer flanks (28) and/or the load-bearing belt (9) according to Claim 7 are provided with an elastic, noise-damping, anticorrosive, wear-resisting coating (31).

10. Traction chain with drive according to Claims 1,2,3,4,5,6,7,8 and 9 characterised by the fact that the individual parts are made of plastics.

## Revendications

1. Chaîne de poussée avec entraînement correspondant pour la transmission de forces de poussée et de traction, la chaîne de poussée (20) étant constituée d'éclisses intérieures (23) et extérieures (24) de façon unilatéralement rigide (au dos)
conduite dans une boîte d'entraînement (2) par l'intermédiaire d'une roue dentée d'entraînement pour la poussée et la traction,
les flancs extérieurs (28) étant constitués sur le côté à dos rigide de la chaîne (20) pour la transmission des forces de poussé sur le boîtier (2,3) de façon que ces flancs (2) soient tirés en forme d'arc de cercle au point de rotation de la roue d'entraînement/de renvoi (6, 7),
caractérisée en ce que ces flancs (28) sont reliés en une seule surface portante (29), les éclisses extérieures (24) et/ou les éclisses intérieures (23) étant biseautées à partir de leur goujon (27) vers l'intérieur environ de la moitié de l'angle de flambage,
et l'espace libre (32) formé à l'état d'extension est rempli du moins partiellement par un corps de remplissage (33) éventuellement sous l'action d'un ressort, assurant la chaîne (20) hors des boîtiers (2,3) contre le flambage et ces corps de remplissage (33) étant mus par le contact, le guidage et la force de ressort à travers les boîtiers (2,3), la roue d'entraînement et de renvoi (6, 7, 42) entre la position de verrouillage et de déverrouillage, les boîtiers d'entraînement et de renvoi (2,3) permettant un angle d'entrée/de sortie variable de la chaîne durant le fonctionnement,
la chaîne (20) étant entourée à son périmètre extérieur formé par le diamètre et la structure de la roue à chaîne (6) par une bande porteuse de charge (9), posée de façon circulante par-dessus les galets (10,11,14), à l'intérieur du boîtier (2), le galet de renvoi (14) étant monté de façon tournante sur un support de galet (15), fixé lui-même de façon pivotante dans le boîtier d'entraînement (2) et portant à son extrémité qui dépasse le galet de renvoi (14) un galet de guidage (16) qui touche la face intérieure de la chaîne (20), celle-ci étant guidée par-dessus des roues dentées (42) à roulement automatique dans un magasin (43) servant au stockage sur plusieurs couches des pièces de chaîne non utilisés.

2. Chaîne de poussée avec entraînement correspondant pour la transmission de forces de poussée et de traction, la chaîne de poussée (20) étant formée d'éclisses intérieures (23) et extérieures (24) à rigidité unilatérale (côté dos)
et menée dans un boîtier d'entraînement (2) par dessus une roue dentée (6),
les flancs extérieurs(28) étant constitués sur le côté à dos rigide de la chaîne (20) pour la transmission des forces de poussée sur le boîtier (2,3),
la chaîne (20) étant ceinte dans les boîtiers d'entraînement et de renvoi (2,3) par plusieurs galets (13) à disposition essentiellement en arc de cercle,
caractérisée en ce que ces galets (13) sont fixés entre deux plaques à galets (5) logées de façon rotative autour d'un arbre (8) du boîtier d'entraînement ou de renvoi (2,3),
les éclisses extérieures (24), et/ou les éclisses intérieures (23) étant biseautées à partir de leurs goujons (27) vers l'intérieur environ de la moitié de l'angle de flambage,
et l'espace libre (32) formé en extension est rempli du moins partiellement par un corps de remplissage (33) mobile, éventuellement sous l'action d'un ressort, assurant la chaîne (20) hors des boîtiers (2,3) contre le flambage et ces corps de remplissage (33) étant mus par le contact, le guidage et la force de ressort à travers les boîtiers (2,3) la roue dentée d'entraînement ou de renvoi (6, 7, 42) entre la position de verrouillage et de déverrouillage, les boîtiers d'entraînement et de renvoi (2,3) permettant un angle d'entrée/de sortie variable de la chaîne (20) durant le fonctionnement,
celle-ci étant guidée par-dessus des roues dentées (42) à roulement automatique dans un magasin (43) servant au stockage sur plusieurs couche des pièces de chaîne non utilisées.

3. Chaîne de poussée avec entraînement correspondant pour la transmission de forces de poussée et de traction, la chaîne de poussée (20) étant constituée d'éclisses intérieures (23) et extérieures (24) de façon unilatéralement rigide (au dos)
conduite dans une boîte d'entraînement (2) par l'intermédiaire d'une roue dentée d'entraînement pour la poussée et la traction,
les flancs extérieurs (28) étant constitués sur le côté à dos rigide de la chaîne (20) pour la transmission des forces de poussé sur le boîtier (2,3),
des boulons à galets (45) étant disposés à proximité des flancs extérieurs, sur lesquels se trouvent des galets d'appui tournants (46),
la chaîne (20) étant entourée dans les boîtiers d'entraînement et de renvoi (2,3) par une surface de roulement (48) disposée essentiellement en arc de cercle,
caractérisée en ce que cette surface de roulement (48) est reliée à des plaques tournantes (47), logées de façon rotative autour de l'arbre (8) du boîtier d'entraînement et de renvoi (2,3)
les éclisses extérieures (24), et/ou les éclisses intérieures (23) étant biseautées à partir de leur goujon (27) vers l'intérieur environ de la moitié de l'angle de flambage,
et l'espace libre (32) formé à l'état d'extension est rempli du moins partiellement par un corps de remplissage (33) éventuellement sous l'action d'un ressort, assurant la chaîne (20) hors des boîtiers (2,3) contre le flambage et ces corps de remplissage (33) étant mus par le contact, le guidage et la force de ressort par l'intermédiaire des boîtiers (2,3), la roue d'entraînement et de renvoi (6, 7, 42) entre la position de verrouillage et de déverrouillage, les boîtiers d'entraînement et de renvoi (2,3) permettant un angle d'entrée/de sortie variable de la chaîne durant le fonctionnement,
celle-ci étant guidée par-dessus des roues dentées (42) à roulement automatique dans un magasin (43) permettant de stocker en plusieurs couches des pièces de chaîne non utilisés.

4. Chaîne de poussée avec entraînement selon la revendication 3, caractérisée en ce que les flancs extérieurs (28) des éclisses (23, 24) resp. les flancs extérieurs (29) sont plats ou en forme de courbe.

5. Chaîne de poussée avec entraînement selon la revendication 1, 3 et 4, caractérisée en ce que les flancs (28) resp. les flancs extérieurs (29) sont d'une longueur approximative d'un maillon de chaîne.

6. Chaîne de poussée avec entraînement selon la revendication 1, caractérisée en ce que la chaîne (20) ne dispose pas d'une sûreté de flambage (33, 35, 37).

7. Chaîne de poussée avec entraînement selon la revendication 2, 3 et 4, caractérisée en ce que plus de 3 galets (10,11,14) guident la bande porteuse (9) de charge.

8. Chaîne de poussée avec entraînement selon la revendication 1, 5 et 6, caractérisée en ce que la bande porteuse de charge (9) est constituée de maillons de chaîne métalliques.

9. Chaîne de poussée avec entraînement selon la revendication 1, 2, 3, 4, 5, 6, 7 et 8, caractérisée en ce que les flancs extérieurs (29), resp. les flancs extérieurs (28) et/ou la bande porteuse de charge (9) est équipée d'un revêtement élastique (31), amortissant les bruits, protégeant contre la corrosion et amoindrissant l'usure selon la revendication 7.

10. Chaîne de poussée selon la revendication 1, 2, 3, 4, 5, 6, 7, 8 et 9, caractérisée en ce que certaines pièces sont faites en matières plastiques.
